# EUROPÄISCHE PATENTANMELDUNG

(11) **EP 2 765 329 A1**
(43) Veröffentlichungstag der Anmeldung: **13.08.2014**
(21) Anmeldenummer: 13154769.7
(22) Anmeldetag: 11.02.2013
(51) Int. Cl.: F16F 15/02

(54) **Vorrichtung zum mechanischen Einstellen eines Schwingungsverhaltens eines Maschinenelements**

(71) Anmelder: Siemens Aktiengesellschaft, 80333 München (DE)
(72) Erfinder: Guderian, Bernd, 91126 Schwabach (DE); Lemberg, Peter, 92348 Berg b. Neumarkt i.d.Oberpfalz (DE); Procksch, Andreas, 90469 Nürnberg (DE)

(57) **Zusammenfassung**

Die Erfindung betrifft eine Vorrichtung (10) zum mechanischen Einstellen eines Schwingungsverhaltens eines Maschinenelements, wobei die Vorrichtung mit dem Maschinenelement koppelbar ist oder als ein Teil des Maschinenelements ausgebildet ist, die Vorrichtung (10) einen Einstellabschnitt (11) für das Einstellen sowie eine in dem Einstellabschnitt (11) angeordnete Aussparung (12) aufweist, und wobei in die Aussparung (12) eine vorgegebene Einsatzeinrichtung (20) derart variabel einsetzbar ist, dass die Steifigkeit des Einstellabschnitts veränderbar ist. Damit lässt sich auch das Schwingungsverhalten des Maschinenelements variieren.

## Beschreibung

Die Erfindung betrifft eine Vorrichtung zum mechanischen Einstellen eines Schwingungsverhaltens eines Maschinenelements gemäß dem Oberbegriff des Anspruchs 1.

An Maschinen und Anlagen führen rotatorische und/oder translatorische Bewegungen häufig zu bestimmten Betriebsfrequenzen, die möglicherweise mit Eigenfrequenzen von diesen Maschinen/Anlagen bzw. einzelnen Komponenten dieser Maschinen/Anlagen übereinstimmen oder sehr nahe beieinander liegen. Dies führt zu nachteiligen Resonanzanregungen, die hohe Lagerkräfte und Materialbeanspruchungen (schnellere Materialermüdung) mit sich bringen, insbesondere auch bei stoffschlüssigen Verbindungen wie Schweißnähten. Hierdurch wird auch die Anlagensicherheit nachteilig beeinflusst. Solche Schwingungen können systemimmanent sein oder auch durch benachbart aufgestellte Maschinen oder Anlagen hervorgerufen werden, z.B. in einem Schiffskörper aus Stahl, welcher Schwingungen materialbedingt gut leitet, und in welchem meist mehrere Dieselaggregate oder Schwungmassen vorgesehen sind, die jeweils Schwingungen verursachen können.

Es ist Aufgabe der Erfindung, eine Vorrichtung bereitzustellen, mittels welcher auf einfache Weise das Schwingungsverhalten einer Maschine, Anlage, eines Strukturbauteils oder irgendeines Maschinenelementes optimierbar ist.

Diese Aufgabe wird durch eine Vorrichtung mit den Merkmalen des Patentanspruchs 1 gelöst. Vorteilhafte Ausgestaltungen mit zweckmäßigen Weiterbildungen der Erfindung sind in den abhängigen Patentansprüchen angegeben.

Erfindungsgemäß ist demnach vorgesehen eine Vorrichtung zum mechanischen Einstellen eines Schwingungsverhaltens eines Maschinenelements, wobei
- die Vorrichtung mit dem Maschinenelement koppelbar ist oder als ein Teil des Maschinenelements ausgebildet ist,
- die Vorrichtung einen Einstellabschnitt für das Einstellen sowie
- eine in dem Einstellabschnitt angeordnete Aussparung aufweist, und wobei
- in die Aussparung eine vorgegebene Einsatzeinrichtung derart variabel einsetzbar ist, dass die Steifigkeit des Einstellabschnitts veränderbar ist.

Eine solche Vorrichtung kann im Hinblick auf deren Funktion auch als Schwingungsfrequenzkontrollmittel bezeichnet werden. Bevorzugt ist das Maschinenelement ein Rahmen, Maschinengehäuse oder ein beliebiges Strukturbauteil einer Anlage. Durch den Einsatz der erfindungsgemäßen Vorrichtung kann z.B. ein Feinwuchten rotierender Bauteil entbehrlich werden. Bei ungünstigen Eigenschwingungen ist eine flexible Änderung der Dämpfungseigenschaften des Einstellabschnitts möglich, und es ist keine aufwändige Änderung eines konstruktiven Aufbaus oder irgendeine Anpassung einer Unterbausteifigkeit erforderlich.

Die Vorrichtung zum mechanischen Einstellen eines Schwingungsverhaltens eines Maschinenelements kann, insbesondere zum Einstellen einer Eigenfrequenz zwecks Dämpfung von Schwingungen in einem bestimmten Frequenzbereich vorgesehen sein. Bevorzugt ist die Vorrichtung mit einem Elektromotor koppelbar. Weiter bevorzugt ist in der Aussparung ein Lager zur Lagerung einer mit der Aussparung korrespondierenden Einsatzeinrichtung ausgebildet.

Die betreffende Maschine mit dem Maschinenelement kann zum Ausführen von rotatorischen und/oder translatorischen Bewegungen ausgebildet sein oder mit einem weiteren Maschinenelement zum Ausführen solcher Bewegungen gekoppelt sein. Die zu dämpfenden Schwingungen können durch diese Bewegungen verursacht sein, es kann sich jedoch auch um Vibrationen oder Schwingungen handeln, die von der Umgebung, also irgendeinem weiteren Maschinenteil verursacht werden.

Mittels der Einsatzeinrichtung ist die Aussparung zumindest teilweise verschließbar. Allein durch die Massenänderung ergibt sich ein anderes Schwingungsverhalten, was zu einer Optimierung genutzt werden kann.

Als ein Einstellabschnitt ist dabei bevorzugt ein Bereich eines Maschinenelements zu verstehen, in welchem eine Kraft auf das Maschinenelement ausgeübt oder eine zusätzliche Masse eingesetzt werden kann.

Als eine Einsatzeinrichtung ist gegebenenfalls ein aus einer oder mehreren Komponenten bestehendes Bauteil zu verstehen, welches einsteckbar oder einsetzbar ist und/oder geometrisch verformbar ist und dabei weitgehend starr bleibt und gegebenenfalls eine Kraft ausüben kann, insbesondere indem es in zumindest einer Raumrichtung in den Außenabmessungen vergrößert bzw. verkleinert wird.

Als ein Lager ist bevorzugt eine Lagerfläche zu verstehen, an welcher die Einsatzeinrichtung insbesondere flächig zur Anlage kommen kann und insbesondere eine (Druck-)Kraft auf den Einstellabschnitt ausüben kann. Dadurch kann die Aussparung aufgebogen, also vergrößert werden, was in der Regel zu einer Veränderung von Eigenschwingungen führt.

Die Schwingungen des Maschinenelements können Eigenschwingungen sein und/oder Schwingungen, die durch eine andere mit dem Maschinenelement gekoppelte Maschine oder eine in der Umgebung angeordnete Maschine verursacht werden.

Die Einsatzeinrichtung kann in der Aussparung variabel positionierbar und/oder durch die Einsatzeinrichtung gegenüber der leeren Aussparung aufgebogen sein. Durch beide Maßnahmen lässt sich eine Änderung der Schwingungseigenschaften der Vorrichtung und damit des Maschinenelements erreichen.

Gemäß einem vorteilhaften Ausführungsbeispiel ist der Einstellabschnitt an einem Randbereich der Vorrichtung vorgesehen, so dass der Einstellabschnitt von seiner Umgebung her leicht zugänglich angeordnet ist. Hierdurch kann mittels der Einsatzeinrichtung eine Kraft auf besonders wirkungsvolle Weise auf den Einstellabschnitt ausgeübt werden, insbesondere bei runden Außengeometrien, bei welchen durch die Anordnung im Randbereich eine Oberflächenspannung umlaufend auf die gesamte Umfangsfläche bezogen beeinflusst werden kann. Gleichzeitig bleibt die Aussparung gut zugänglich. Ferner kann auch das Volumen-Masse-Verhältnis der Vorrichtung verändert werden, indem zumindest in einem geringen Maße die Außenabmessungen der Vorrichtung verändert werden, insbesondere durch die Kraft vergrößert werden. Dies kann z.B. durch Aufweiten bzw. Aufbiegen der Aussparung erfolgen.

Gemäß einem vorteilhaften Ausführungsbeispiel kann in der Aussparung eine weitere Einsatzeinrichtung gelagert sein, wobei die Aussparung jeweils mindestens eine Lagerfläche für die Einsatzeinrichtungen bildet. Hierdurch kann eine größere Variabilität beim Einstellen der Eigenfrequenz bereitgestellt werden. Es kann wahlweise nur eine der Einsatzeinrichtungen oder auch beide in die Aussparung eingesetzt sein.

Die Lagerfläche ist bevorzugt als ein Passsitz für ein flächiges Anliegen der korrespondierenden Einsatzeinrichtungen ausgebildet, also eine Fläche, die geometrisch und in ihren Abmessungen auf die Geometrie und die Abmessungen der Einsatzeinrichtung abgestimmt ist, und in welcher eine Lagerung auch allein über Haftreibung möglich ist.

Gemäß einem vorteilhaften Ausführungsbeispiel ist in der Aussparung mindestens eine Lagerfläche zur Lagerung der Einsatzeinrichtung gebildet ist, welche in einem Neigungswinkel größer 0° gegenüber einer Montagerichtung zur Montage der Einsatzeinrichtung in der Aussparung ausgerichtet ist. Bevorzugt weisen das/die Lager mindestens eine konische Innenmantelfläche auf, welche mit einer korrespondierenden konischen Außenmantelfläche der Einsatzeinrichtung(en) kuppelbar ist/sind. Mittels der konischen Mantelflächen kann die Kraft auf einfache Weise und stetig eingestellt werden, insbesondere indem die Einsatzeinrichtung daran zur Anlage gebracht wird und mit steigender Kraft daran entlang gleiten kann.

Gemäß einem vorteilhaften Ausführungsbeispiel ist die Aussparung derart ausgebildet ist, dass die vorgegebene Einsatzeinrichtung form- und/oder kraftschlüssig mit dem Einstellabschnitt koppelbar ist. Hierdurch kann die Einsatzeinrichtung z.B. über Haftreibung an der Vorrichtung fixiert werden. Der Vorteil einer Fixierung mittels Haftreibung besteht in der großen Variabilität der Anordnung der Einsatzeinrichtung in Bezug auf die Vorrichtung, was eine gute Feineinstellung der Eigenfrequenz ermöglicht. Die Lagerung kann als eine oder mehrere Lagerflächen ausgebildet sein, an welchen die Einsatzeinrichtung oder mehrere Einsatzeinrichtungen in einer beliebigen Position angeordnet werden können. Bei Formschluss sind in der Regel bestimmte Positionen für die Einsatzeinrichtung(en) vorgegeben.

Gemäß einem vorteilhaften Ausführungsbeispiel weist die Einsatzeinrichtung ein erstes Einsatzteil und ein zweites Einsatzteil auf, die über ein Spannelement miteinander gekoppelt sind. Hierdurch lassen sich die Einsatzteile an den Einstellabschnitt pressen und gegebenenfalls auf die Aussparung eine Kraft ausüben.

Gemäß einem vorteilhaften Ausführungsbeispiel sind das erste und/oder zweite Einsatzteil konisch geformt sind. Hierdurch kann die Einsatzeinrichtung in dem montierten Zustand eine Kraft auf den Einstellabschnitt ausüben, welche in einem Winkel größer 45 Grad zu der Montagerichtung ausgerichtet ist, bevorzugt größer 60 Grad, insbesondere im Bereich von 65 bis 85 Grad.

Gemäß einem vorteilhaften Ausführungsbeispiel ist das Spannelement eine Schraube ist, wobei eine Kraft auf den Einstellabschnitt durch eine Anziehkraft der Schraube einstellbar ist. Somit kann bei einer vergleichweise geringen Kraft des Spannelements eine große Kraft in einer Richtung senkrecht zu der Montagerichtung auf den Einstellabschnitt ausgeübt werden, und der Einstellabschnitt kann aufgeweitet werden und die Spannung innerhalb des Einstellabschnitts und auch in einem großen Bereich der gesamten Vorrichtung verändert werden.

Insbesondere kann so ein Elektromotor mit einem Gehäuse oder Rahmen realisiert werden, wobei das Gehäuse oder der Rahmen mit einer wie oben beschriebenen Vorrichtung ausgestattet ist.

Die vorstehend in der Beschreibung genannten Merkmale und Merkmalskombinationen sowie die nachfolgend in der Figurenbeschreibung genannten oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen, wobei gleiche oder funktionsgleiche Elemente mit identischen Bezugszeichen versehen sind. Dabei zeigen:
- FIG 1: in einer perspektivischen Seitenansicht einen Ausschnitt aus einem Maschinenrahmen oder -gehäuse mit einer Aussparung für eine Einsatzeinrichtung;
- FIG 2: in einer Seitenansicht den Ausschnitt der FIG 1 mit einer in der Aussparung angeordneten und mit dem Maschinenrahmen bzw. -gehäuse gekoppelten Einsatzeinrichtung, welche die Aussparung teilweise verschließt, wodurch eine Vorrichtung gemäß einem ersten Ausführungsbeispiel der Erfindung bereitgestellt wird;
- FIG 3: in einer Seitenansicht einen Ausschnitt aus einem Maschinenrahmen oder -gehäuse mit zwei ineinander übergehenden Aussparung und mit zwei in den Aussparungen angeordneten und mit dem Maschinenrahmen bzw. -gehäuse gekoppelten Einsatzeinrichtungen, welche die Aussparungen teilweise verschließen, wodurch eine Variante der Vorrichtung gemäß einem ersten Ausführungsbeispiel der Erfindung bereitgestellt wird;
- FIG 4: in einer Schnittansicht die in der FIG 3 gezeigte Vorrichtung, wobei im Detail ein Aufbau der Einsatzeinrichtung gezeigt ist;
- FIG 5: in einer Seitenansicht einen Ausschnitt aus einem Maschinenrahmen oder -gehäuse mit einer Aussparung und einer in der Aussparung angeordneten und mit dem Maschinenrahmen bzw. -gehäuse gekoppelten Einsatzeinrichtung, welche die Aussparung teilweise verschließt, wodurch eine Vorrichtung gemäß einem zweiten Ausführungsbeispiel der Erfindung bereitgestellt wird;
- FIG 6: in einer Schnittansicht die in der FIG 5 gezeigte Vorrichtung, wobei im Detail ein Aufbau der Einsatzeinrichtung gezeigt ist;
- FIG 7: in einer Seitenansicht einen Ausschnitt aus einem Maschinenrahmen oder -gehäuse mit einer Aussparung und einer in der Aussparung angeordneten und mit dem Maschinenrahmen bzw. -gehäuse gekoppelten Einsatzeinrichtung, wodurch eine Variante der Vorrichtung gemäß einem zweiten Ausführungsbeispiel der Erfindung bereitgestellt wird;
- FIG 8: in einer Seitenansicht einen Ausschnitt aus einem Maschinenrahmen oder -gehäuse mit einer Aussparung für eine Einsatzeinrichtung;
- FIG 9: in einer Seitenansicht den Ausschnitt der FIG 8 mit einer in der Aussparung angeordneten und mit dem Maschinenrahmen bzw. -gehäuse gekoppelten Einsatzeinrichtung, welche die Aussparung vollständig verschließt, wodurch eine Vorrichtung gemäß einem dritten Ausführungsbeispiel der Erfindung bereitgestellt wird;
- FIG 10: in einer Schnittansicht die in der FIG 9 gezeigte Vorrichtung, wobei im Detail ein Aufbau der Einsatzeinrichtung gezeigt ist;
- FIG 11: in einer Seitenansicht einen Ausschnitt aus einem Maschinenrahmen oder -gehäuse mit einer Aussparung für eine Einsatzeinrichtung;
- FIG 12: in einer Seitenansicht den Ausschnitt der FIG 11 mit einer in der Aussparung angeordneten und mit dem Maschinenrahmen bzw. -gehäuse gekoppelten Einsatzeinrichtung, welche die Aussparung teilweise verschließt und verlagerbar mit der Aussparung gekoppelt ist, wodurch eine Vorrichtung gemäß einem vierten Ausführungsbeispiel der Erfindung bereitgestellt wird;
- FIG 13: in einer Schnittansicht die in der FIG 12 gezeigte Vorrichtung, wobei im Detail ein Aufbau der Einsatzeinrichtung gezeigt ist; und
- FIG 14: in einer Seitenansicht einen Elektromotor, an welchem eine Vorrichtung gemäß einem der Ausführungsbeispiele der Erfindung vorgesehen ist.

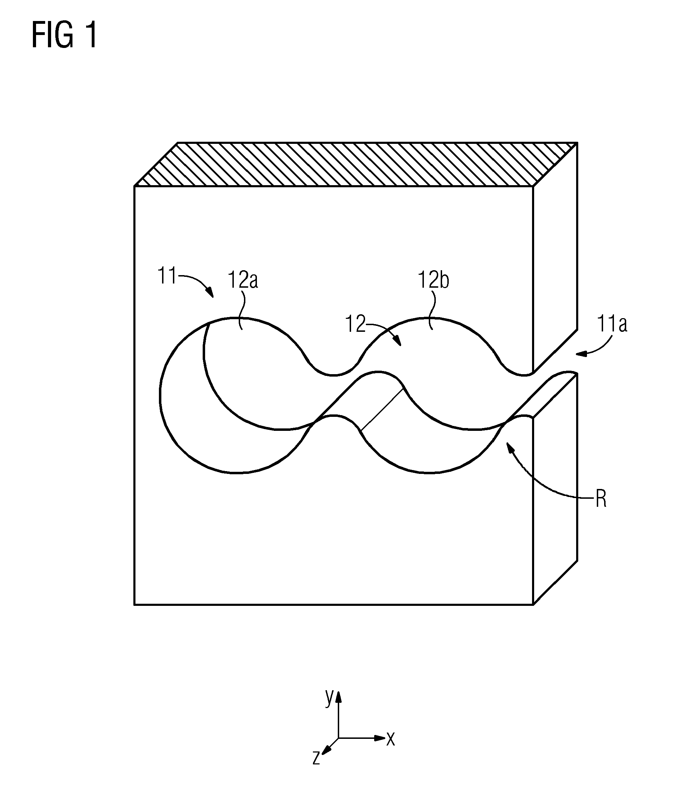

In der FIG 1 ist ein Ausschnitt aus einem Maschinenrahmen oder -gehäuse mit einer Aussparung 12 für eine Einsatzeinrichtung (nicht dargestellt) gezeigt, wobei die Aussparung 12 in einem Einstellabschnitt 11 des Maschinenrahmens vorgesehen ist. Die Aussparung 12 ist durch einen ersten und zweiten Teil 12a, 12b gebildet, die ineinander übergehen und zusammen eine seitliche Öffnung 11a in einem Randbereich R des Einstellabschnitts 11 bereitstellen. Die Aussparung muss aber nicht mit einer seitlichen Öffnung versehen sein. Durch die Anordnung und Geometrie der Aussparung 12 kann das Schwingungs- und Dämpfungsverhalten des Maschinenrahmens beeinflusst werden.

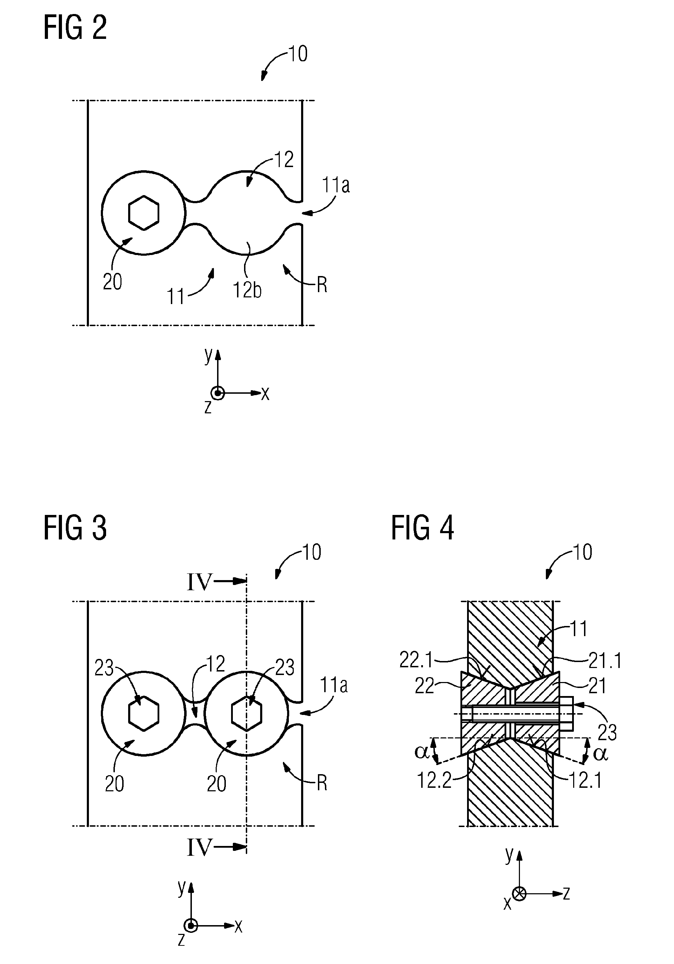

In der FIG 2 ist eine Einsatzeinrichtung 20 gezeigt, welche die Aussparung 12 teilweise verschließt, wodurch eine Vorrichtung 10 bereitgestellt wird, mittels welcher eine Kraft auf den Einstellabschnitt 11 ausgeübt werden kann, insbesondere in y-Richtung. Die Einsatzeinrichtung 20 kann wahlweise in den linken oder rechten Teil der Aussparung hier durch Formschluss angeordnet werden. Die Kraft kann gegebenenfalls dazu führen, dass die Aussparung aufgebogen bzw. aufgeweitet wird. Die Steifigkeit des Einstellabschnitts 11 verändert sich entsprechend. Dies hat eine Veränderung der Eigenfrequenzen zur Folge. Hat beispielsweise der Einstellabschnitt 11 bzw. der Maschinenrahmen eine Resonanzfrequenz bei einer Frequenz f1, so verschiebt sich die Resonanzfrequenz durch die Einsatzeinrichtung auf die Frequenz f2, die von f1 verschieden ist.

In der FIG 3 ist zusätzlich eine zweite in dem rechten Teil 12b der Aussparung angeordnete Einsatzeinrichtung 20 gezeigt, wobei die gesamte Aussparung durch die beiden Einsatzeinrichtungen 20 teilweise verschlossen wird. Die Einsatzeinrichtungen 20 können jeweils über ein Spannelement 23 in dem Einstellabschnitt 11 verspannt werden, insbesondere in z-Richtung, und individuell eine Kraft auf den Einstellabschnitt 11 ausüben, insbesondere in y-Richtung. Dabei ist die Anordnung der Einsatzeinrichtungen 20 durch die Geometrie der Aussparung 12 vorgegeben. Durch die zwei Einsatzeinrichtungen 20 in der Aussparung 12 ergibt sich beispielsweise eine neue Resonanzfrequenz f3, die von f1 und f2 verschieden ist.

In der FIG 4 ist gemäß dem in der FIG 3 angedeuteten Schnitt III eine der Einsatzeinrichtungen 20 mit dem Spannelement 23 geschnitten dargestellt, wobei die Einsatzeinrichtung 20 aus zwei rotationssymmetrischen Einsatzteilen 21, 22 gebildet ist, die jeweils eine konische Außenmantelfläche 21.1, 22.1 aufweisen. Die Einsatzteile 21, 22 sind so zueinander angeordnet, dass die konischen Außenmantelflächen 21.1, 22.1 zueinander weisen und eine X-Anordnung bilden. An dem Einstellabschnitt 11 in der Aussparung sind korrespondierende Innenmantelflächen vorgesehen, nämlich eine erste konische Innenmantelfläche 12.1 und eine zweite konische Innenmantelfläche 12.2. Die Neigung der konischen Innenmantelflächen 12.1, 12.2 und/oder der konischen Außenmantelflächen 21.1, 22.1 kann über einen Neigungswinkel α > 0° gegenüber der z-Richtung (Montagerichtung) definiert sein.

Das Spannelement 23 ist hier als Schraube ausgebildet, welche jeweils in einem Innengewinde der Einsatzteile 21, 22 geführt ist und die Einsatzteile 21, 22 aufeinander zieht und dadurch eine Kraft auf die Innenmantelflächen 12.1, 12.2 ausübt, welche im Wesentlichen in einer y-Richtung ausgerichtet ist, je nach Neigung der konischen Flächen. Die Einsatzteile können aber auch durch eine andere Verbindungstechnik, z.B. durch Verstiften, die einen sicheren Kraft- oder Formschluss gewährleistet, miteinander verbunden sein.

In der gezeigten Stellung kann die Kraft auf den Einstellabschnitt bzw. dessen Aufweitung weiter erhöht werden, indem die Einsatzteile 21, 22 durch weiteres Spannen der Schraube 23 aufeinander zu bewegt werden, insbesondere bis sie aneinander zur Anlage kommen, wobei die jeweiligen Mantelflächen aneinander entlang geleiten. Auch das Anziehen der Schraube bewirkt eine Verschiebung der Eigenfrequenzen bzw. der/einer Resonanzfrequenz.

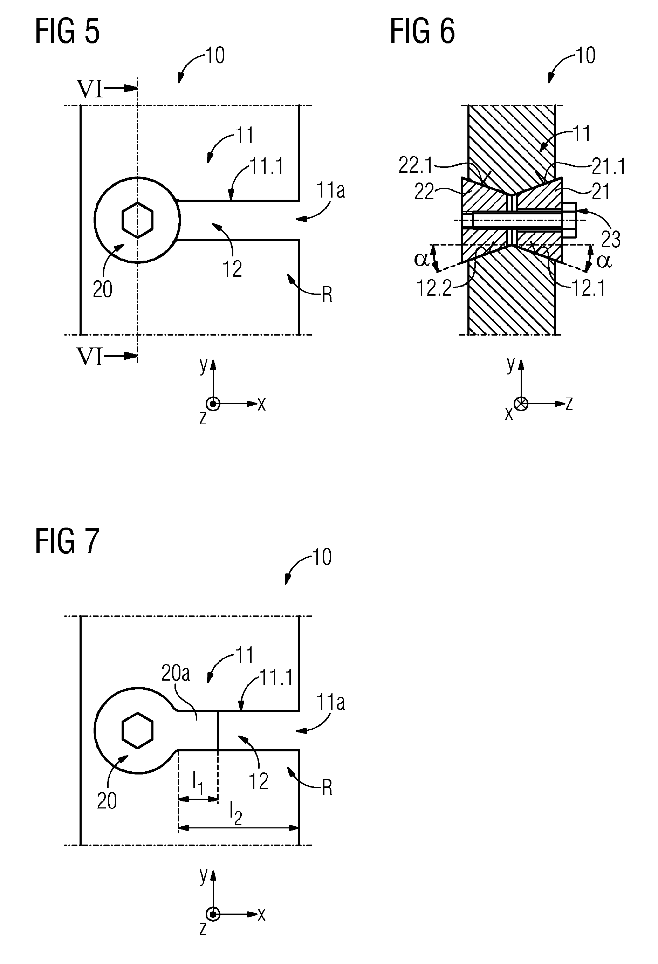

In der FIG 5 ist ein Ausführungsbeispiel gezeigt, bei welchem eine Aussparung 12 für eine einzelne Einsatzeinrichtung 20 bereitgestellt ist. Der Einstellabschnitt 11 weist einen durch die Aussparung 12 vorgegebenen linearen Öffnungsbereich 11.1 auf, welcher in der dargestellten Variante der Einsatzeinrichtung 20 frei ist, also ohne dass eine Einsatzeinrichtung darin angeordnet ist. In der FIG 6ist die Einsatzeinrichtung 20 gemäß dem in der FIG 5 angedeuteten Schnitt V dargestellt, wobei die Einsatzeinrichtung 20 einen dem in FIG 5 entsprechenden Aufbau aufweist.

In der FIG 7 ist eine Variante der Einsatzeinrichtung 20 gezeigt, bei welcher die Einsatzeinrichtung 20 auch in dem linearen Öffnungsbereich 11.1 angeordnet ist. Die Einsatzeinrichtung 20 weist einen Fortsatz 20a auf, welcher in den linearen Öffnungsbereich 11.1 hineinreicht, insbesondere etwa bis zur Hälfte. Über die Länge 11 des Fortsatzes 20a in Bezug auf die Länge 12 des linearen Öffnungsbereichs 11.1 kann die Wirkung der Einsatzeinrichtung 20 auf den Einstellbereich 11 eingestellt werden. Je länger der Fortsatz 20a ausgebildet ist, desto größer ist der Bereich, in welchem eine Kraft in den Einstellabschnitt 11 eingeleitet werden kann. Dabei ist die Anordnung der Einsatzeinrichtung 20 durch die Geometrie der Aussparung 12 vorgegeben. Der Fortsatz 20a stellt außerdem eine Masseerhöhung gegenüber dem Beispiel von FIG 5 dar, wodurch sich eine Verschiebung der Eigenfrequenzen des Maschinenelements ergibt. Zudem ist durch den Fortsatz eine Verdrehsicherung gegeben, die gegebenenfalls auch durch Rillen oder Riefen in den Mantelflächen der Einsatzeinrichtung 20 und/oder der Aussparung 12 realisierbar ist.

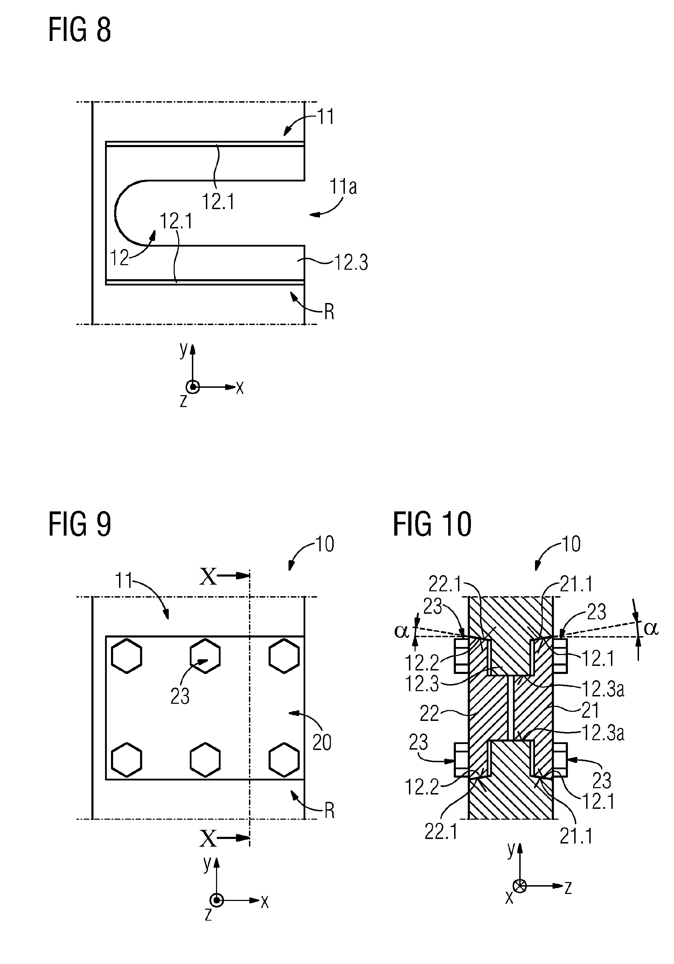

In der FIG 8 ist eine Aussparung 12 gezeigt, die zur Aufnahme einer anders verspannten Einsatzeinrichtung 20 (nicht dargestellt) ausgebildet ist. Hierzu weist die Aussparung 12 Flächen 12.1 auf, welche in einer xy-Ebene (senkrecht zur Montagerichtung y) verlaufen und parallel zueinander ausgerichtet sind. Ferner weist die Aussparung 12 einen nach innen in die Aussparung 12 hervorstehenden Teil 12.3 auf, an welchem eine Einsatzeinrichtung (nicht dargestellt) fixiert werden kann. In dem hervorstehenden Teil 12.3 können dazu Befestigungs-oder Führungsmittel (nicht dargestellt) vorgesehen sein, z.B. Durchgangsbohrungen.

In der FIG 9 ist eine die Aussparung 12 von FIG 8 vollständig verschließende Einsatzeinrichtung 20 gezeigt, welche mittels einer Mehrzahl von Spannelementen 23 mit dem Einstellabschnitt 11 gekoppelt ist. Die Kopplung kann durch Haftreibung oder durch zumindest teilweise Befestigung der Spannelemente an dem Einstellabschnitt 11 erfolgen.

In der FIG 10 ist gemäß dem in der FIG 9 angedeuteten Schnitt IX der Aufbau der Einsatzeinrichtung 20 gezeigt. Die Einsatzeinrichtung 20 ist aus zwei Einsatzteilen 21, 22 in Form von plattenartigen Keilen gebildet, die jeweils zwei schräg in einem Winkel α in Bezug auf die z-Richtung (Montagerichtung) verlaufende Flächen 21.1, 22.1 aufweisen. Die Einsatzteile 21, 22 können an Stirnflächen 12.3a des hervorstehenden Teils 12.3 gelagert sein, wodurch eine Relativbewegung des Einstellabschnitts 11 in der y-Richtung begrenzt werden kann: die Bewegung der Stirnflächen 12.3a wird dann durch die Einsatzteile 21, 22 begrenzt. Die Einsatzteile 21, 22 sind so zueinander angeordnet, dass die Flächen 21.1, 22.1 zueinander weisen und eine X-Anordnung bilden. An dem Einstellabschnitt 11 sind korrespondierende Flächen vorgesehen, nämlich zwei erste gegenüber voneinander angeordnete Flächen 12.1 und zwei zweite gegenüber voneinander angeordnete Flächen 12.2. Auch diese Flächen verlaufen schräg in Bezug auf die z-Richtung. Werden die Einsatzteile 21, 22 in dem Einstellabschnitt 11 eingespannt, so werden die Stirnflächen 12.3a von den Einsatzteilen 21, 22 in bzw. entgegen der y-Richtung wegbewegt. Daraus resultiert wieder eine Verschiebung der Eigenfrequenzen des Einstellabschnitts.

Die Spannelemente 23 sind z.B. als Schraubbolzen ausgebildet, welche jeweils in einem der Einsatzteile 21, 22 geführt sind und im montierten Zustand die Einsatzteile 21, 22 auf den hervorstehenden Teil 12.3 der Aussparung 12 ziehen und dadurch eine Kraft auf die Flächen 12.1, 12.2 bzw. den Einstellabschnitt 11 ausüben, welche im Wesentlichen in einer y-Richtung ausgerichtet ist, je nach Neigung der Flächen. Die Neigung der Flächen 12.1, 12.2 und/oder der Flächen 21.1, 22.1 kann über einen Neigungswinkel α gegenüber der z-Richtung definiert sein. In der gezeigten Stellung kann die Kraft weiter erhöht werden, indem die Einsatzteile 21, 22 durch weiteres Spannen der Schrauben 23 näher zu dem hervorstehenden Teil 12.3 bewegt werden, insbesondere bis sie daran zur Anlage kommen, wobei die jeweiligen Flächen aneinander entlang geleiten.

Die Schrauben 23 verbinden entweder beide Einsatzteile 21, 22 miteinander oder greifen in ein Innengewinde (nicht dargestellt) an dem hervorstehenden Teil 12.3 ein. Das Innengewinde kann dabei so ausgebildet sein, dass eine Verlagerung der Schraube 23 in y-Richtung möglich ist, z.B. als Langloch mit einer gewindeartigen Struktur an gegenüberliegenden Flächen. Es können auch paarweise eine Schraube und eine Mutter vorgesehen sein, wobei die Schraube in einem Langloch in dem hervorstehenden Teil 12.3 geführt ist.

Weder der Einstellabschnitt noch die Einsatzeinrichtung muss stets gegenüber der Montagerichtung (z-Richtung) eine geneigte Fläche (z.B. konische Fläche) aufweisen. Vielmehr können für die Verbindung beider Komponenten auch reine Passungen oder sonstige Kraftschlüsse verwendet werden.

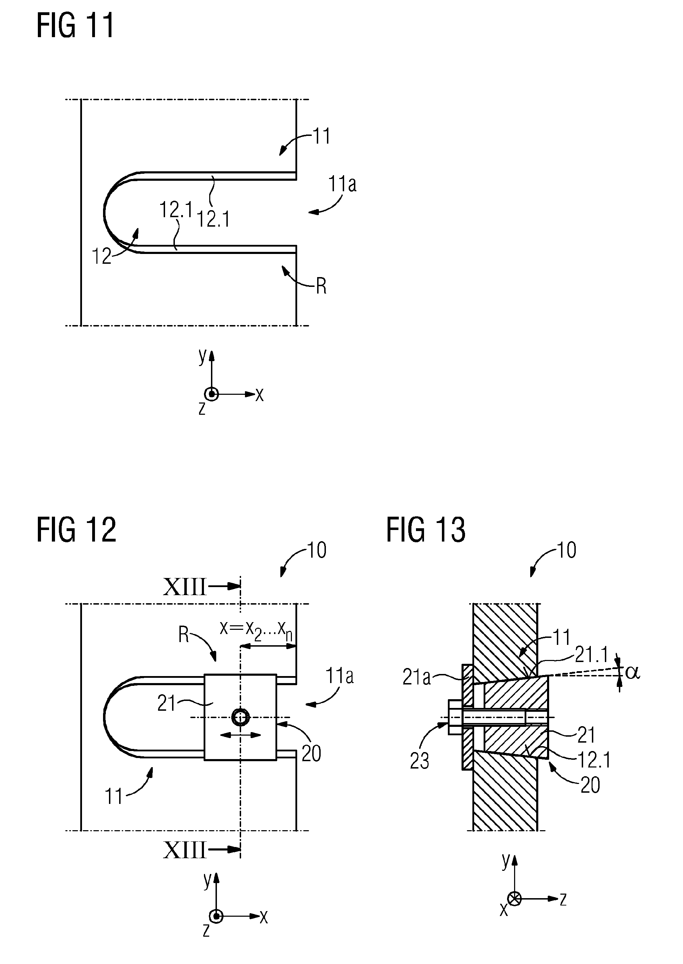

In der FIG 11 ist eine Aussparung 12 gezeigt, die zwei gegenüberliegende schräg verlaufende Flächen 12.1 aufweist. Die Aussparung 12 ist zur Anordnung einer in der Aussparung 12 an unterschiedlichen x-Positionen lagerbaren Einsatzeinrichtung (nicht dargestellt) in x-Richtung länglich ausgebildet. Hierbei weist die Aussparung 12 Flächen 12.1 auf, welche in x-Richtung verlaufen und um die x-Achse geneigt zueinander ausgerichtet sind.

In der FIG 12 ist eine mit dem Einstellabschnitt 11 von FIG 11 gekoppelte Einsatzeinrichtung 20 gezeigt, welche die Aussparung 12 teilweise verschließt und in der x-Richtung verlagerbar ist. Die Einsatzeinrichtung 20 kann in einer Vielzahl unterschiedlicher x-Positionen angeordnet werden. Hierdurch können die Steifigkeit bzw. die Schwingungseigenschaften des Einstellabschnitts 11 auf besonders flexible Weise eingestellt werden. Dabei ist die x-Position der Einsatzeinrichtung 20 in den Grenzen der Aussparung 12 veränderbar.

In der FIG 13 ist gemäß dem in der FIG 12 angedeuteten Schnitt XII der Aufbau der Einsatzeinrichtung 20 gezeigt, wobei auch ein Einsatzteil 21 zwecks besserem Verständnis geschnitten dargestellt ist. An dem Einsatzteil 21 ist eine konische Außenmantelfläche 21.1 vorgesehen, welche einen Neigungswinkel α gegenüber der z-Richtung aufweist. Das Einsatzteil 21 kann über eine Schraube 23 in der z-Richtung (Montagerichtung) in die Aussparung 12 gezogen werden, um eine Kraft in y-Richtung auf den Einstellabschnitt 11 auszuüben. Die Schraube 23 ist durch eine Konterplatte 21a hindurchgeführt, welche an dem Einstellabschnitt 11 zur Anlage kommt. Die Konterplatte 21a kann aus einem Material mit einer bestimmten Oberflächenrauhigkeit ausgeführt sein, mittels welcher eine gute Haftreibung der Konterplatte 21a an dem Einstellabschnitt 11 sichergestellt werden kann.

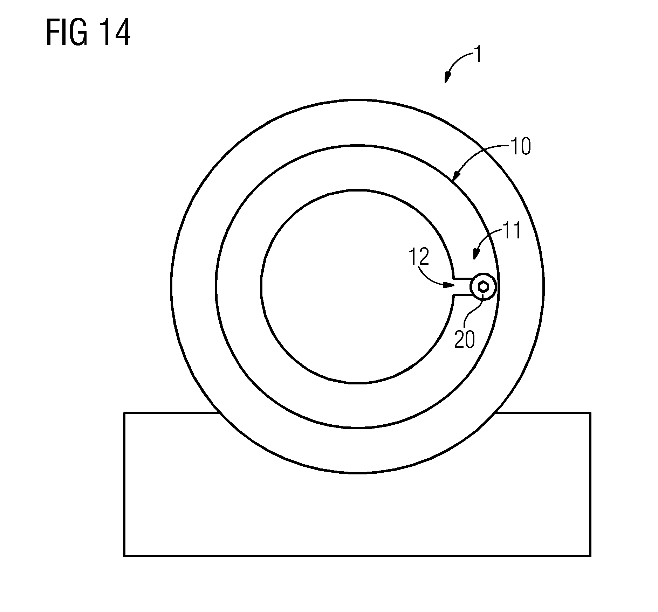

In der FIG 14 ist stellvertretend für eine beliebige Maschine oder Anlage ein Elektromotor 1 gezeigt, an welchem eine wie oben in mehreren Varianten geschilderte Vorrichtung 10 zum Einstellen einer Eigenfrequenz des Elektromotors 1 bzw. seines Gehäuses oder Rahmens vorgesehen ist, wobei die Vorrichtung 10 einen Einstellabschnitt 11 aufweist, in welchem eine Aussparung 12 vorgesehen ist. In der Aussparung 12 ist eine Einsatzeinrichtung 20 angeordnet, die mit dem Einstellabschnitt 11 gekoppelt ist und eine Kraft auf den Einstellabschnitt 11 ausübt.

Durch die zusätzliche Masse und Position der Einsatzeinrichtung sowie deren auf den Einstellabschnitt ausgeübten Kraft - dies gilt für alle Ausführungsformen - verändern sich die Eigenfrequenzen des Gehäuses, Rahmens oder Elektromotors gegenüber dem Fall der leeren Aussparung. Durch diese Parameter können also Resonanzfrequenzen so verschoben werden, dass diese nicht von der betreffenden Maschine (z.B. Elektromotor) angeregt werden. Nach einer geeigneten Verschiebung der Resonanzfrequenz erfolgt dann beispielsweise eine Anregung mit einer Frequenz deutlich abseits der Resonanzfrequenz, wodurch faktisch eine Reduktion bzw. Dämpfung der Eigenschwingungen erreicht wird.

## Patentansprüche

1. Vorrichtung (10) zum mechanischen Einstellen eines Schwingungsverhaltens eines Maschinenelements, wobei
- die Vorrichtung mit dem Maschinenelement koppelbar ist oder als ein Teil des Maschinenelements ausgebildet ist,
**dadurch gekennzeichnet, dass**
- die Vorrichtung einen Einstellabschnitt (11) für das Einstellen sowie
- eine in dem Einstellabschnitt (11) angeordnete Aussparung (12) aufweist, wobei
- in die Aussparung eine vorgegebene Einsatzeinrichtung (20) derart variabel einsetzbar ist, dass die Steifigkeit des Einstellabschnitts (11) veränderbar ist.

2. Vorrichtung nach Anspruch 1, **dadurch gekennzeichnet, dass** die Einsatzeinrichtung (20) in der Aussparung (12) variabel positionierbar ist.

3. Vorrichtung nach Anspruch 1 oder 2, **dadurch gekennzeichnet, dass** die Aussparung (12) durch die Einsatzeinrichtung (20) aufgebogen ist gegenüber der leeren Aussparung.

4. Vorrichtung nach einem der vorhergehenden Ansprüche, **dadurch gekennzeichnet, dass** der Einstellabschnitt (11) an einem Randbereich der Vorrichtung (10) vorgesehen ist, so dass der Einstellabschnitt von seiner Umgebung her leicht zugänglich angeordnet ist.

5. Vorrichtung nach einem der vorhergehenden Ansprüche, **dadurch gekennzeichnet, dass** in der Aussparung (12) eine weitere Einsatzeinrichtung (20) gelagert ist, wobei die Aussparung jeweils mindestens eine Lagerfläche (12.1, 12.2) für die Einsatzeinrichtungen bildet.

6. Vorrichtung nach einem der vorhergehenden Ansprüche, **dadurch gekennzeichnet, dass** in der Aussparung (12) mindestens eine Lagerfläche (12.1, 12.2) zur Lagerung der Einsatzeinrichtung (20) gebildet ist, welche in einem Neigungswinkel größer 0° gegenüber einer Montagerichtung (y) zur Montage der Einsatzeinrichtung (20) in der Aussparung ausgerichtet ist.

7. Vorrichtung nach einem der vorhergehenden Ansprüche, **dadurch gekennzeichnet, dass** die Aussparung (12) derart ausgebildet ist, dass die vorgegebene Einsatzeinrichtung (20) form- und/oder kraftschlüssig mit dem Einstellabschnitt (11) koppelbar ist.

8. Vorrichtung nach einem der vorhergehenden Ansprüche, **dadurch gekennzeichnet, dass** die Einsatzeinrichtung (20) ein erstes Einsatzteil (21) und ein zweites Einsatzteil (22) aufweist, die über ein Spannelement (23) miteinander gekoppelt sind.

9. Vorrichtung nach Anspruch 8, **dadurch gekennzeichnet, dass** das erste und/oder zweite Einsatzteil (21, 22) konisch geformt sind.

10. Vorrichtung nach Anspruch 8 oder Anspruch 9, **dadurch gekennzeichnet, dass** das Spannelement (23) eine Schraube ist, wobei eine Kraft auf den Einstellabschnitt (11) durch eine Anziehkraft der Schraube einstellbar ist.

11. Elektromotor mit einem Gehäuse oder Rahmen, wobei das Gehäuse oder der Rahmen mit einer Vorrichtung (10) nach einem der vorhergehenden Ansprüche, ausgestattet ist.
